# EUROPEAN PATENT SPECIFICATION

(11) **EP 3 322 281 B1**
(45) Date of publication and mention of the grant of the patent: **17.04.2024**
(21) Application number: 16823937.4
(22) Date of filing: 06.07.2016
(51) Int. Cl.: A01D 75/18, B65G 33/24, B65G 33/14, A01D 57/30

(54) **MOWER WITH AUGER CONVEYOR**
MÄHER MIT SCHNECKENFÖRDERER
FAUCHEUSE COMPRENANT UN TRANSPORTEUR À VIS SANS FIN

(30) Priority: 13.07.2015 FI 20150214
(43) Date of publication of application: 23.05.2018
(73) Proprietor: Oy El-Ho Ab, 68910 Bennäs (FI)
(72) Inventor: LÖFBACKA, Johan, 68930 Purmo (FI)
(74) Representative: Kolster Oy Ab
(86) International application number: PCT/FI2016/000019
(87) International publication number: WO 2017/009522

(56) References cited:
- EP-A1- 0 028 045
- CN-U- 204 280 599
- GB-A- 2 088 684
- JP-Y1- S4 311 303
- US-A- 4 720 962
- US-A- 5 443 421
- US-A1- 2014 311 869
- US-A1- 2014 367 225

## Description

### Field of the invention

The present innovation relates to a mower for being used in agriculture, the mower comprising an auger conveyor to sideways transport cut grass or correspondent straw- like material from said mower, the auger conveyor comprising a transport auger being partially enclosed in a housing, comprising a bottom tray and a hatch.

### Background of the invention

Auger conveyors are very common as well in the industry as in the agriculture. Mainly they are used stationary to transport semi-liquid or granular material, grain, pellets, chopped wood and correspondent, but also a lot of mobile applications are known.

To prevent overload of auger conveyors a lot of solutions are known within technics. The most common ones can schematically be divided into three groups:
- Torque limiters for the auger.
- Limitation of the feed to the conveyor auger.
- Regulating the speed ratio between the feed input and the auger conveyor.

Within the agriculture auger conveyors are used for example on the combine headers to transport the cut material from the wide knife section to the central threshing rotor feed. These augers are open to their construction and are covered by housing for hardly half of their periphery. When this type of auger conveyors do reach their capacity limit, they simply do not take in more, but the material starts to gather on the header directly within the vision of the driver and he will then reduce the speed.

If the auger is not within the vision of the driver or is covered by housing, the regulation of the capacity becomes more problematic. To bring grass from several cut traits together, mower conditioners of today (mowers equipped with treatment rotors behind the cutting beam) mainly use belt conveyors. The benefit of this type of conveyors is that they are relative non-sensitive for overload. If such occur, the belt can slip under the grass without creating damage to the machine itself.

As the construction is open, it is possible to easily empty the conveyor by tilting it hydraulically up and let out the material.

Such solution samples we can find inter alia in the patent documents: FI20090199 (Oy El-Ho Ab), US622364 (Deere & Company) and in the DE3604691 (Claas Saulgau GmbH).

To get these belt conveyors to work satisfactory it thus is needed that the conditioner rotor throws the material up in a manner that the flow of material falls optimally on the transport belt. In even crops, it is possible to find an optimal adjustment, but if the crop on the field is uneven these belt conveyors needs continuous monitoring and adjustments to work satisfactory.

In the patent documents FR2494547 (Hesston SA,) from 1980, and in EP1111985 (Maschinenfabrik Bernard Krone GmbH,) from 1999 solutions are presented, where auger conveyors are used in mower conditioners to bring cut grass from several cut traits together.

In the Japanese utility model JPS4311303 Y1 from 1968 an auger conveyor for powdered material is presented. This auger conveyor is mainly intended to be used in conditions with high moisture (near hot process water supply) where the risks for disturbances thus are increased.

US 5 443 421 A discloses a prior art mower according to the preamble of claim 1.

This auger conveyor has a conical shaped input opening (3) for the powdered material in its outermost end. In addition it is equipped with a likewise conical discharge opening (4) between drive unit (9) and the input opening. To register an incipient surging of the conveyor the cylindrical housing is in the drive end equipped with a small flap (7) who affects a switch (8). The opening angle of this flap is aware as small as possible to make it quickly to react on increased pressure in the drive end side of the auger conveyor.

The benefit with auger conveyors is that they at least mainly have a closed housing and are therefore less sensitive for how the material to be transported is thrown in to the conveyor. They are thus less sensitive for variations in the crop and at least theoretically, it is therefore possible to reach reduction of waste with this type of conveyors.

The disadvantage with these auger conveyors is that if they are overloaded, it means, if their capacity temporarily is exceeded as for example when a mower is driven across an already cut swath, a major blockage of the auger itself easily occur. On the known solutions on the market, such blockages are very time consuming and even dangerous to clear up, as the clamped grass has to be pulled out by hand.

### Brief description of the invention

To overcome these disadvantages a conveyor according the present innovation has been developed based on solutions according the following patent claims. This object is achieved by a mower with the features of claim 1

Preferred aspects are defined in the dependent claims.

The main benefit of the innovation is in the ability of the mower to keep the grass within the auger also in varying crop and at different driving speeds without need of readjustments related to the working conditions. If overload occur, the conveyor will be emptied automatically.

### Brief description of the drawings

In the following, a preferred embodiment of the invention is described with the aid of the following principled drawings.
Fig. 1 shows a section side view of the mower conditioner according the innovation.
Fig. 2 shows the outlet part of the conveyor seen obliquely from behind.
Fig. 3 shows a side view of the conveyor seen from the outlet with the hatch closed.
Fig. 4 shows a side view of the conveyor from the outlet with the hatch open.
Fig. 5 shows a side view of the conveyor from the outlet with the clear finger in two different positions.

### Detailed description

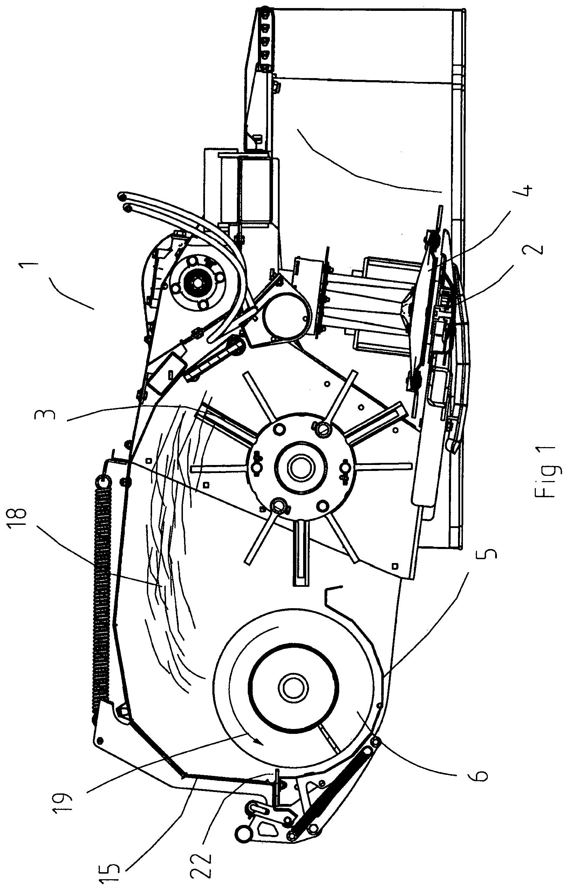

The cutting unit in fig 1 shows a cutter bar 2 mainly perpendicular to the drive direction with associated cutting discs with knives 4, a rotating treatment unit 3, a transport auger 6 in a bottom tray 5, a hatch 15 and schematically grass 18.

The direction of rotation for the transport auger is given with the arrow 19. The transport auger is further equipped with a scraper edge 22.

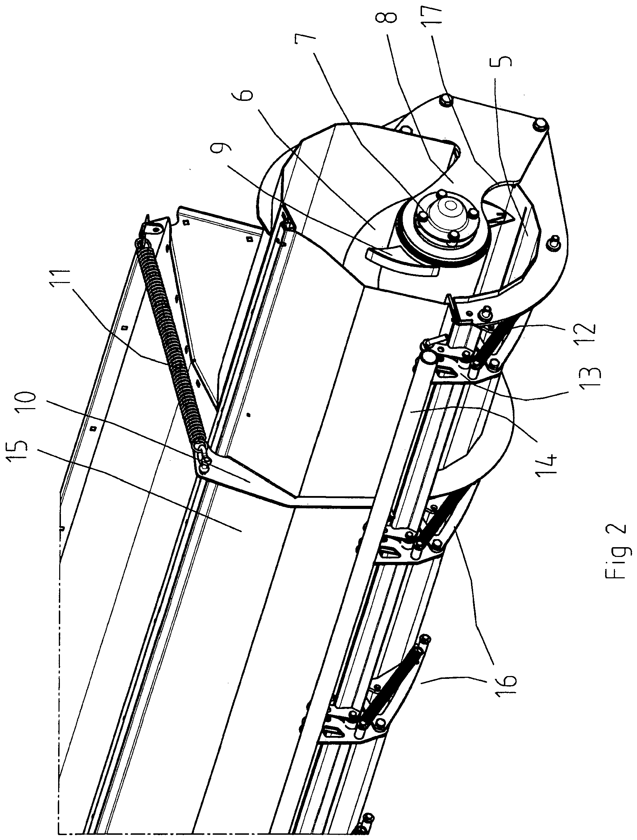

Fig 2 shows a part of a transport auger unit seen from the outlet opening obliquely from behind. The bearing 7 supports the transport auger 6, who in its outer end shows clear finger 9. The bearing 7 for the transport auger is
carried by a support arm 8, which in its lower part shows a cutting edge 17.

At the rear is further the hatch 15 of the transport auger seen with support 10 and to this attached hatch offloading spring 11. Beneath the transport auger is also the bottom tray 5 of the auger conveyor seen, to which a number of trigger units 16 are mounted. The trigger unit has in turn locking mechanism 13 loaded by the lock spring 12 and pivoted around the swivel point 20. The trigger units are interconnected to each other with the torsion bar 14.

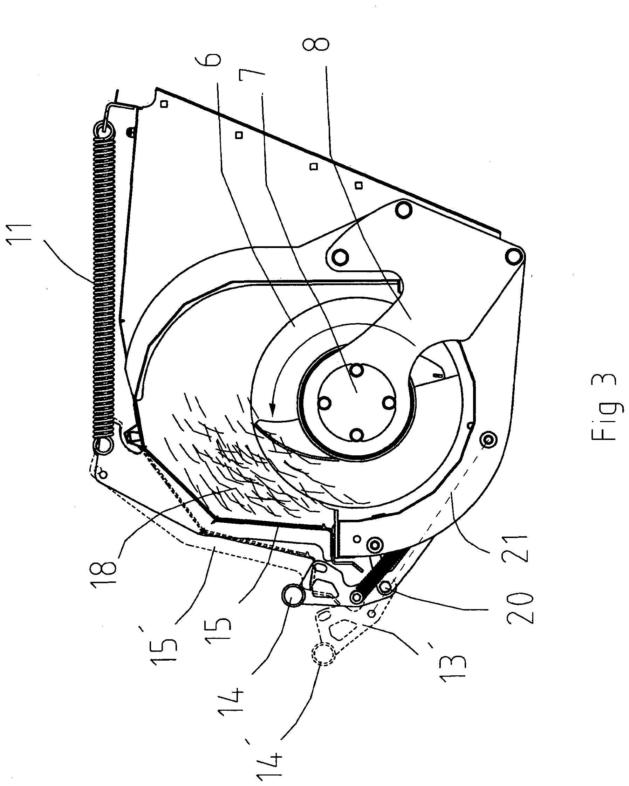

Fig 3 shows a side view of the conveyor seen from the outlet with grass 18 who press against the hatch 15. The centreline of the lock spring 12 is shown by a broken line 21.

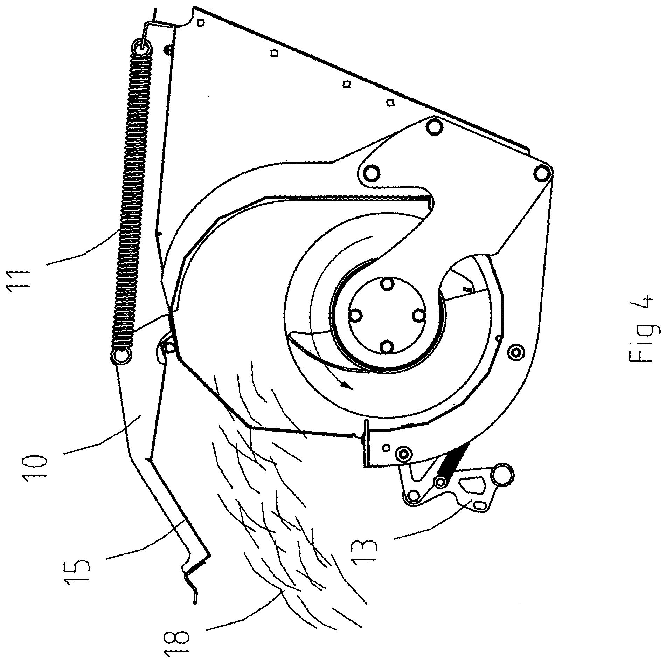

Fig 4 shows the same side view but with the lock mechanism 13 and the hatch 15 in open position.

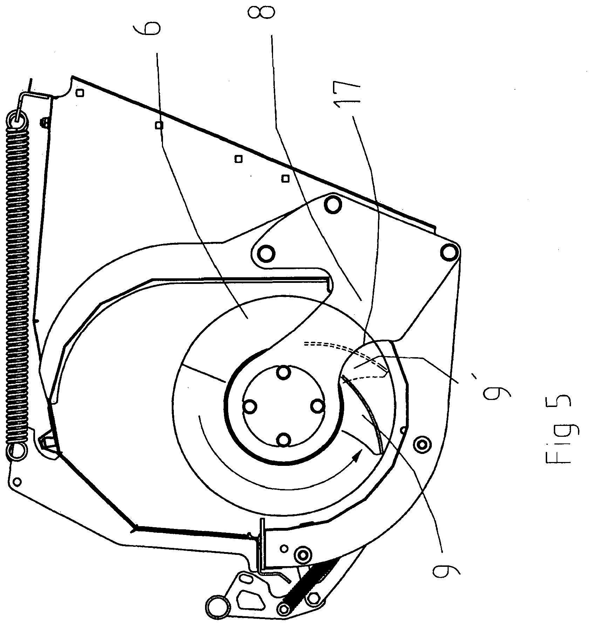

Fig 5 shows the same side view with the clear finger 9 in two different positions.

The transport auger according the present innovation operates in the following manner. During work the knives on the cutting disks 4 are cutting the grass, who after is caught by the rotating treatment unit 3 and is thrown backwards against the hatch 15 and is caught by the transport auger 6, who quickly transports the grass in the direction of the outlet opening. As long as the capacity of the transport auger is bigger than the from the treatment unit 3 thrown amount of grass, the pressure against the hatch 15 remain fairly small and the force from the lock springs 12 keeps the lock mechanism 13 and so also the hatch 15 closed.

It the flow of grass 18 suddenly increase so that the transport auger do not manage to bring the material out through the outlet opening, grass starts to accumulate and due to the rotation direction of the transport auger and the friction between the grass and auger, grass is pressed more strongly against the hatch 15. As the lock springs 12 are not more able to keep the lock mechanism 13 in locked position, these swivels around their swivel points 20. The position of the hatch and the lock mechanism at incipient congestion is shown with broken lines. As soon as the centre line of the lock spring 12 mow on the other side of the swivel point 20 of the lock mechanism 13, all the lock mechanisms opens fully and takes the positions shown in fig 4, while they are interconnected with the torsion bar 14. The springs 11 do then open the hatch 15 fully and the grass can freely be thrown out of the machine and the transport auger 6 empties itself. As the hatch now is kept fully open, the rotating treatment unit 3 now throws the grass directly out to the rear.

If one likes to cut grass without mowing the material sideways it is easy to open the hatch manually by pulling the torsion bar 14 to the rear.

To make the in its outer end supported transport auger working smoothly it is important that the support arm 8 for the transport auger bearing 7 is situated in such a position where the auger spiral already as completely as possible is emptied of its content.

In a solution as in the present figures, this is achieved if the main direction of the support arm is in the fourth quadrant of the rotation circle (corresponds to the area between 6 and 3 on a clock).

As it by long straw material, in the praxis is impossible to get the transport auger fully emptied without risk of material to be clamped to the support arm 8, it is a benefit if the support arm in its external end is equipped with a clear finger 9. This clear finger is preferably equipped with an inclined arcuate front edge, which collects the rest material towards the bottom tray 5 to finally cut off the grass against the cutting edge 17 of the support arm 8. In this manner it is prohibited that a long rope of together twisted grass starts to hang on the support arm and disturb the flow of material.

Naturally, the innovation is not confined to the above described preferred embodiment but a plurality of variations thereof is feasible within the scope of the claims below.

### Referens number

- 1: Cutting unit
- 2: Cutterbar
- 3: Rotating treatment unit
- 4: Cutting disc with knives
- 5: The bottom tray of the auger conveyor
- 6: Transport auger
- 7: Bearing for transport auger
- 8: support arm for transport auger bearing
- 9: Clear finger
- 10: Hatchr support
- 11: Hatch off loading spring
- 12: Lock spring
- 13: Lock mechanism
- 14: Torsion bar
- 15: Hatch
- 16: Trigger unit
- 17: Cutting edge
- 18: Grass
- 19: Auger rotation direction
- 20: Swivel point of trigger unit
- 21: Centre line of lock spring
- 22: Scraper edge

## Claims

1. Mower (1) for being used in agriculture, the mower comprising an auger conveyor to sideways transport cut grass or correspondent straw-like material (18) from said mower, the auger conveyor comprising a transport auger (6) being partially enclosed in a housing, comprising a bottom tray (5) and a hatch (15),
**characterized in that**
the hatch (15) is a hinged hatch, which has an axial extent within the main transport area (19) of the transport auger (6), and
the hatch (15) is part of an overload protection co-operating with at least one lock mechanism (13) being biased with a resilient member (12), the lock mechanism being arranged to release the hatch (15) at an incipient congestion of material (18) against the hatch (15) exceeding the locking power of the lock mechanism (13) to give the cut material (18) passage to the rear.

2. Mower (1) according to claim 1, **characterized in that** the resilient member (12) is a lock spring.

3. Mower (1) according to claim 2, **characterized in that** an action line (21) for the resilient member (12) of the locking mechanism (13) pass a swivel point (20) of the lock mechanism at an incipient congestion of the transport auger (6).

4. Mower (1) according to one or more of the preceding claims 1 to 3 , **characterized in that** several lock mechanisms (13) are interconnected with a torsion bar (14) so that all of them opens practically simultaneous at an incipient congestion of the transport auger (6).

5. Mower (1) according to one or more of the preceding claims, **characterized in that** between the bottom tray (5) of the transport auger (6) and the hatch (15) are parallel surfaces arranged to prevent the material (18) from leaking out when the hatch flex outward before the locking mechanism (13) is triggered.

6. Mower (1) according to one or more of the preceding claims, **characterized in that** one or more springs (11) are connected to the hatch (15), such that after release of the locking mechanisms (13) the offloading members are arranged to open the hatch (15) to allow for a free discharge of material (18).

7. Mower (1) according to one or more of the preceding claims, **characterized in that** the hatch (15) is applicable in an open position as to cut without a side movement of the cut material (18).

8. Mower (1) according to one or more of the preceding claims, **characterized in that** the hatch (15) is arranged to co-operate with trigger units (16), said trigger units being mounted to the bottom tray (5) and each comprise one of the locking mechanisms (13) loaded by the corresponding resilient element, wherein the resilient element is a lock spring (12), wherein the trigger units are pivotable around a swivel point (20), whereby the trigger units are interconnected to each other with a torsion bar (14).

9. Mower (1) according to claim 8, **characterized in that** the trigger units (16) are interconnected with each other to release the hatch (15) fully, hereby enabling the grass to be freely thrown out of the machine and the transport auger (6) is arranged to empty itself as the fully open hatch being arranged to enable the rotating treatment unit (3) to throw the grass directly out to the rear of the mower.

## Patentansprüche

1. Mäher (1) zur Verwendung in der Landwirtschaft, wobei der Mäher einen Schneckenförderer zum seitlichen Transport von geschnittenem Gras oder entsprechendem strohartigem Material (18) vom Mäher umfasst, wobei der Schneckenförderer eine Transportschnecke (6) umfasst, die teilweise von einem Gehäuse umschlossen ist, das eine Bodenwanne (5) und eine Luke (15) umfasst,
**dadurch gekennzeichnet, dass**
die Luke (15) eine Scharnierluke ist, die eine axiale Erstreckung im Haupttransportbereich (19) der Transportschnecke (6) aufweist, und
die Luke (15) Teil eines Überlastungsschutzes ist, der mit mindestens einem Verriegelungsmechanismus (13) zusammenwirkt, der mit einem elastischen Element (12) vorgespannt ist, wobei der Verriegelungsmechanismus angeordnet ist, bei einem einsetzenden Stau von Material (18) gegen die Luke (15), der die Verriegelungskraft des Verriegelungsmechanismus (13) überschreitet, die Luke (15) freizugeben, um das geschnittene Material (18) nach hinten zu leiten.

2. Mäher (1) nach Anspruch 1, **dadurch gekennzeichnet, dass** das elastische Element (12) eine Verriegelungsfeder ist.

3. Mäher (1) nach Anspruch 2, **dadurch gekennzeichnet, dass** eine Wirklinie (21) für das elastische Element (12) des Verriegelungsmechanismus (13) bei einem einsetzenden Stau an der Transportschnecke (6) einen Schwenkpunkt (20) des Verriegelungsmechanismus passiert.

4. Mäher (1) nach einem oder mehreren der vorhergehenden Ansprüche 1 bis 3, **dadurch gekennzeichnet, dass** mehrere Verriegelungsmechanismen (13) an einen Torsionsstab (14) gekoppelt sind, derart, dass alle von ihnen bei einem einsetzenden Stau an der Transportschnecke (6) praktisch gleichzeitig öffnen.

5. Mäher (1) nach einem oder mehreren der vorhergehenden Ansprüche, **dadurch gekennzeichnet, dass** sich zwischen der Bodenwanne (5) der Transportschnecke (6) und der Luke (15) parallele Flächen befinden, die angeordnet sind, es zu verhindern, dass das Material (18) austritt, wenn sich die Luke nach außen biegt, bevor der Verriegelungsmechanismus (13) ausgelöst ist.

6. Mäher (1) nach einem oder mehreren der vorhergehenden Ansprüche, **dadurch gekennzeichnet, dass** eine oder mehrere Federn (11) derart mit der Luke (15) verbunden sind, dass nach Freigeben des Verriegelungsmechanismus (13) die Abladeelemente angeordnet sind, die Luke (15) zu öffnen, um eine freie Ausgabe des Materials (18) zu erlauben.

7. Mäher (1) nach einem oder mehreren der vorhergehenden Ansprüche, **dadurch gekennzeichnet, dass** die Luke (15) in einer offenen Position anwendbar ist, um ohne eine Seitenbewegung des geschnittenen Materials (18) zu schneiden.

8. Mäher (1) nach einem oder mehreren der vorhergehenden Ansprüche, **dadurch gekennzeichnet, dass** die Luke (15) angeordnet ist, mit Auslöseeinheiten (16) zusammenzuwirken, wobei die Auslöseeinheiten an der Bodenwanne (5) montiert sind und jede einen der Verriegelungsmechanismen (13) umfasst, die von der entsprechenden elastischen Komponente geladen sind, wobei die elastische Komponente eine Verriegelungsfeder (12) ist, wobei die Auslöseeinheiten um einen Schwenkpunkt (20) schwenkbar sind, wodurch die Auslöseeinheiten mit einem Torsionsstab (14) aneinandergekoppelt sind.

9. Mäher (1) nach Anspruch 8, **dadurch gekennzeichnet, dass** die Auslöseeinheiten (16) aneinandergekoppelt sind, um die Luke (15) vollständig freizugeben, wodurch es dem Gras ermöglicht wird, frei aus der Maschine geworfen zu werden, und die Transportschnecke (6) angeordnet ist, sich selbst zu entleeren, da die vollständig offene Luke angeordnet ist, es der sich drehenden Behandlungseinheit (3) zu ermöglichen, das Gras direkt hinten aus dem Mäher zu werfen.

## Revendications

1. Faucheuse (1) destinée à être utilisée en agriculture, la faucheuse comprenant un transporteur à vis sans fin pour transporter latéralement de l'herbe coupée ou une matière de type paille (18) de ladite faucheuse, le transporteur à vis sans fin comprenant une vis sans fin de transport (6) qui est partiellement enfermée dans un boîtier, comprenant un plateau inférieur (5) et une trappe (15),
**caractérisée en ce que** :
la trappe (15) est une trappe à charnière qui a une étendue axiale dans la zone de transport principale (19) de la vis sans fin de transport (6), et
la trappe (15) fait partie d'une protection de surcharge coopérant avec au moins un mécanisme de verrouillage (13) qui est sollicité avec un élément résilient (12), le mécanisme de verrouillage étant agencé pour libérer la trappe (15) à un engorgement naissant de matériau (18) contre la trappe (15) dépassant la puissance de verrouillage du mécanisme de verrouillage (13) pour laisser passer le matériau coupé (18) à l'arrière.

2. Faucheuse (1) selon la revendication 1, **caractérisée en ce que** l'élément résilient (12) est un ressort de verrouillage.

3. Faucheuse (1) selon la revendication 2, **caractérisée en ce qu'**une ligne d'action (21) pour l'élément résilient (12) du mécanisme de verrouillage (13) passe un point de pivot (20) du mécanisme de verrouillage à un engorgement naissant de la vis sans fin de transport (6).

4. Faucheuse (1) selon une ou plusieurs des revendications 1 à 3, **caractérisée en ce que** plusieurs mécanismes de verrouillage (13) sont interconnectés avec une barre de torsion (14) de sorte que tous s'ouvrent pratiquement simultanément à un engorgement naissant de la vis sans fin de transport (6).

5. Faucheuse (1) selon une ou plusieurs des revendications précédentes, **caractérisée en ce qu'**entre le plateau inférieur (5) de la vis sans fin de transport (6) et la trappe (15), on trouve des surfaces parallèles agencées pour empêcher le matériau (18) de fuir lorsque la trappe fléchit vers l'extérieur avant le déclenchement du mécanisme de verrouillage (13).

6. Faucheuse (1) selon une ou plusieurs des revendications précédentes, **caractérisée en ce que** les un ou plusieurs ressorts (11) sont raccordés à la trappe (15) de sorte qu'après la libération des mécanismes de verrouillage (13), les éléments de déchargement sont agencés pour ouvrir la trappe (15) pour permettre une décharge libre du matériau (18).

7. Faucheuse (1) selon une ou plusieurs des revendications précédentes, **caractérisé en ce que** la trappe (15) est applicable dans une position ouverte afin de couper sans mouvement latéral du matériau coupé (18).

8. Faucheuse (1) selon une ou plusieurs des revendications précédentes, **caractérisée en ce que** la trappe (15) est agencée pour coopérer avec des unités de gâchette (16), lesdites unités de gâchette étant montées sur le plateau inférieur (5) et chacune comprend l'un des mécanismes de verrouillage (13) chargés par l'élément résilient correspondant, dans laquelle l'élément résilient est un ressort de verrouillage (12), dans laquelle les unités de gâchette peuvent pivoter autour d'un point de pivot (20), moyennant quoi les unités de gâchette sont interconnectées entre elles avec une barre de torsion (14).

9. Faucheuse (1) selon la revendication 8, **caractérisée en ce que** les unités de gâchette (16) sont interconnectées entre elles pour libérer complètement la trappe (15), permettant ainsi à l'herbe d'être librement éjectée de la machine et la vis sans fin de transport (6) est agencée pour se vider lorsque la trappe grande ouverte est agencée pour permettre à l'unité de traitement rotative (3) d'éjecter directement l'herbe à l'arrière de la faucheuse.
